# EUROPÄISCHE PATENTSCHRIFT

(11) **EP 2 655 176 B1**
(45) Veröffentlichungstag und Bekanntmachung des Hinweises auf die Patenterteilung: **04.12.2019**
(21) Anmeldenummer: 11776122.1
(22) Anmeldetag: 27.10.2011
(51) Int. Cl.: B62D 65/06, B62D 29/04, B60J 5/04

(54) **VERFAHREN ZUM HERSTELLEN VON KRAFTWAGEN UND KRAFTWAGEN**
MOTOR VEHICLE AND ITS FABRICATION PROCESS
VÉHICULE A MOTEUR ET SON PROCÉDÉ DE FABRICATION

(30) Priorität: 23.12.2010 DE 102010055957
(43) Veröffentlichungstag der Anmeldung: 30.10.2013
(73) Patentinhaber: Daimler AG, 70372 Stuttgart (DE)
(72) Erfinder: GREVENER, Christoph, 75391 Gechingen (DE); HABISREITINGER, Uwe, 72250 Freudenstadt/Dietersweiler (DE); KREVET, Andreas, 71139 Ehningen (DE); MÜLLER, Matthias, 72213 Altensteig (DE); STARK, Thomas, 72074 Tübingen (DE); WIRTH, Konrad, 75233 Tiefenbronn (DE); ZÜRN, Michael, 71065 Sindelfingen (DE)
(74) Vertreter: JENSEN & SON
(86) Internationale Anmeldenummer: PCT/EP2011/005430
(87) Internationale Veröffentlichungsnummer: WO 2012/084086

(56) Entgegenhaltungen:
- DE-A1- 4 438 214
- JP-A- 5 115 839
- JP-A- 62 157 873
- US-A- 5 288 356
- US-A- 5 428 880
- US-A1- 2004 016 101

## Beschreibung

Die Erfindung betrifft ein Verfahren zum Herstellen von Personenkraftwagen gemäß dem Oberbegriff des Patentanspruchs 1. Des Weiteren betrifft die Erfindung einen Personenkraftwagen gemäß dem Oberbegriff des Patentanspruchs 2.

Aus der JP 62 157873 A ist ein Verfahren für die Herstellung von Kraftwagen bekannt, bei dem bewegliche Außenhautelemente erst in oder nach einer Montagelinie am jeweiligen Rohbau des Kraftwagens angebracht werden.

Ferner zeigt die JP 5 115839 A ein Montageverfahren für Kraftwagen, bei dem die beweglichen Außenhautteile nach der Vorbehandlung für die Lackierung vom jeweiligen Rohbau getrennt werden und erst in einem späteren Montageschritt wieder daran montiert werden.

Die DE 44 38 214 A1 zeigt einen Kraftwagen, bei dem ein Teil der Karosserie, in diesem Fall ein Vorderwagen, mit einem sogenannten Einheitslack lackiert wird, wobei diese Bereiche später vollständig von daran angebrachten Außenhautteilen verdeckt werden.

Aus dem Serienfahrzeugbau von Personenkraftwagen ist es allgemein bekannt, die jeweilige Karosserie beziehungsweise den jeweiligen Rohbau nach der Rohbaufertigung einer kathodischen Tauchlackierung oder dergleichen Korrosionsschutzlackierung zu unterziehen. Vor dieser kathodischen Tauchlackierung werden bewegliche Anbauelemente wie insbesondere Türen, Hauben oder Klappen bereits in der Rohbaufertigung an der jeweiligen Karosserie befestigt und ausgerichtet, und demzufolge auch gemeinsam mit dem Rohbau durch die kathodische Tauchlackierung geführt. Auch bei der üblicherweise nachfolgenden Decklackierung werden diese beweglichen Anbauelemente am korrespondierenden Rohbau belassen.

Nach der Lackierung ist es bislang üblich, zumindest einige der Anbauelemente vom korrespondierenden Rohbau abzunehmen, um diese beispielsweise mit weiteren Komponenten zu bestücken. So ist es beispielsweise gängig, jeweilige Türen zum korrespondierenden Rohbau nochmals abzunehmen, um diese beispielsweise mit Scheiben und Scheibenhebermodulen, mit Außenspiegeln, mit Ablagefächern oder mit Türinnenverkleidungen auszustatten. Im Anschluss an diese Ausstattungen müssen dann die fertigen Anbauelemente wieder am Rohbau fixiert und ausgerichtet werden.

Die DE 44 38 214 A1 offenbart ein Verfahren zur Herstellung eines Kraftfahrzeugs, wobei die Rohkarosse in zwei Hauptkarossen vormontiert wird.

Aus der US 2004/0016101 A1 ist ein Verfahren zum Herstellen einer Fahrzeugtür bekannt.

Des Weiteren offenbart die JP 5 115 839 A ein Verfahren zum Beschichten eines Fahrzeugs.

Aus der JP 62 157 873 A1 ist ein Verfahren zum Herstellen eines Fahrzeugaufbaus bekannt.

Die US 5 288 356 A offenbart ein beschichtetes Bauteil.

Außerdem ist aus der US 5 428 880 A ein Verfahren zum Herstellen eines Fahrzeugaufbaus bekannt.

Die US 5 428 880 A offenbart ein Verfahren zum Herstellen eines Fahrzeugaufbaus, welcher einen Aufbaubereich und eine Vielzahl an plattenartigen Teilen wie eine Haube, Türen und eine Kofferraumklappe umfasst.

Aufgabe der vorliegenden Erfindung ist es daher, ein Verfahren zum Herstellen von Kraftwagen sowie einen Kraftwagen selbst der eingangs genannten Art zu schaffen, mittels welchem sich eine vereinfachte Herstellung des jeweiligen Kraftwagens realisieren lässt.

Diese Aufgabe wird erfindungsgemäß durch ein Verfahren und einen Kraftwagen mit den Merkmalen der Patentansprüche 1 beziehungsweise 2 gelöst. Vorteilhafte Ausgestaltungen mit zweckmäßigen und nicht-trivialen Weiterbildungen der Erfindung sind in den übrigen Patentansprüchen angegeben.

Um ein Verfahren der eingangs genannten Art zu schaffen, mittels welchem sich die Herstellung der Personenkraftwagen bedeutend vereinfachen lässt, ist es erfindungsgemäß vorgesehen, dass die Außenhautelemente, insbesondere die Türen, Hauben oder Klappen, erst in oder nach einer Hauptmontagelinie, am jeweiligen Rohbau des Kraftwagens angebracht werden, wobei sie erstmalig nach Durchlauf einer kathodischen Tauchlackierung oder dgl. Korrosionsschutzlackierung des jeweiligen Rohbaus des Personenkraftwagens an diesem angebracht werden. Im Unterschied zum bisherigen Stand der Technik, bei welchem die beweglichen Außenhautelemente wie Türen, Hauben oder Klappen bereits in der Rohbaufertigung am korrespondierenden Rohbau angebracht und nachträglich nochmals abgenommen werden mussten, ist es somit erfindungsgemäß vorgesehen, insbesondere auf diesen Schritt der nochmaligen Abnahme der Bauteile zu verzichten. Vielmehr ist es erfindungsgemäß vorgesehen, die besagten beweglichen Anbauteile wie Türen, Hauben oder Klappen erst zu einem späteren Zeitpunkt, nämlich erst in oder nach einer Hauptmontagelinie, am jeweiligen Rohbau zu befestigen. Die Außenhautelemente werden somit erstmalig in der Montage am korrespondierenden Rohbau befestigt.

Des Weiteren durchlaufen die beweglichen Außenhautelemente, insbesondere die Türen, Hauben oder Klappen, eine vom jeweiligen Rohbau des Personenkraftwagens separate kathodische Tauchlackierung oder dergleichen Korrosionsschutzlackierung. Bei dem Verfahren werden ferner die beweglichen Außenhautelemente lediglich einmal am Rohbau angebracht.

Die erfindungsgemäßen Maßnahmen haben darüber hinaus den Vorteil, dass die beweglichen Außenhautelemente wie beispielsweise Türen, Hauben oder Klappen nicht zwingendermaßen tauglich sein müssen, um durch die kathodische Tauchlackierung oder dergleichen Korrosionsschutzlackierung hindurchgeführt werden zu können. Auf diese Weise wird für die Wahl der Materialien der Außenhautelemente sowie für die Karosserie eine hohe Freiheit erreicht, denn es ist nicht mehr erforderlich, dass Karosserie und Außenhautelemente gemeinsam die Lackierprozesse durchlaufen. Dies kann nun in getrennten Prozessen geschehen. Dies ermöglicht es beispielsweise, solche beweglichen Außenhautelemente ebenfalls aus einem Kunststoff zu gestalten. Ein weiterer Vorteil ist es, dass durch die Lackierung bedingte Prozesseinflüsse deutlich reduziert werden können. Ein weiterer Vorteil ist es, dass die Beschädigungsgefahr von jeweiligen Außenhautelementen deutlich reduziert wird, wenn diese zu einem späteren Zeitpunkt der Herstellung des Kraftwagens erst am Rohbau befestigt werden. Überdies ergibt sich - durch das längere Weglassen der Außenhautelemente - eine bessere Zugänglichkeit beispielsweise zum Innenraum des Kraftwagens.

In weiterer Ausgestaltung der Erfindung hat es sich dabei als vorteilhaft gezeigt, wenn der jeweilige Rohbau des Kraftwagens lediglich mit der kathodischen Tauchlackierung oder dergleichen Korrosionsschutzlackierung versehen wird. Mit anderen Worten ist es in weiterer Ausgestaltung der Erfindung besonders vorteilhaft, wenn auf eine Decklackierung des Rohbaus beziehungsweise der Karosserie des Kraftwagens verzichtet werden kann, und wenn demzufolge die komplette Kaschierung des Rohbaus durch bewegliche und nicht-bewegliche Außenhautelemente übernommen wird. Somit ergibt sich durch die Einsparung der Decklackierung ein erhebliches Kosteneinsparungspotential.

Ein weiterer Vorteil des erfindungsgemäßen Verfahrens besteht in dem Entfall der Demontage und der anschließenden Re-Montage der beweglichen Außenhautteile an der Karosserie vor bzw. nach der Rohbaufertigung.

Die vorstehend im Zusammenhang mit dem erfindungsgemäßen Verfahren beschriebenen Vorteile gelten in ebensolcher Weise für den Kraftwagen gemäß Patentanspruch 2.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine schematische Perspektivansicht auf eine Montagelinie zur Vormontage eines jeweiligen Fahrwerks und eines jeweiligen Antriebsstrangs des entsprechenden Kraftwagens sowie eines Bodenmoduls des jeweiligen Kraftwagens, welche miteinander im Rahmen einer so genannten Verlobung verbunden und vormontiert werden, bevor diese mit einem jeweilig zugehörigen Rohbau des entsprechenden Kraftwagens im Rahmen einer so genannten Hochzeit verbunden werden, wobei im Anschluss an die Hochzeit der Kraftwagen mit Rädern bestückt wird;
- Fig. 2: eine schematische Perspektivansicht auf die Vormontage des Antriebsstrangs und des Fahrwerks innerhalb der in Fig. 1 gezeigten Montagelinie;
- Fig. 3: eine schematische Perspektivansicht auf eine Vormontage des Bodenmoduls innerhalb der Montagelinie gemäß Fig. 1;
- Fig. 4: eine schematische Perspektivansicht auf die Verlobung des Fahrwerks und des Antriebsstrangs mit dem jeweils zugehörigen Bodenmodul innerhalb der Montagelinie gemäß Fig. 1;
- Fig. 5: eine schematische Perspektivansicht auf die Hochzeit des jeweiligen Rohbaus des Kraftwagens mit dem zugehörigen Fahrwerk und Antriebsstrang beziehungsweise dem zugehörigen Bodenmodul innerhalb der Montagelinie gemäß Fig. 1;
- Fig. 6: eine schematische Perspektivansicht auf eine Montagestation der Montagelinie gemäß Fig. 1 nach der Hochzeit, innerhalb welcher die Bestückung des Kraftwagens mit den Fahrzeugrädern erfolgt;
- Fig. 7: eine schematische Perspektivansicht auf Montagestationen einer der Montagelinie gemäß Fig. 1 nachgeschalteten Hauptmontagelinie, in welcher der jeweilige Rohbau des Kraftwagens mit dem Inneneinbau ausgestattet wird;
- Fig. 8: eine weitere ausschnittsweise Perspektivansicht auf jeweilige Montagestationen der Hauptmontagelinie, innerhalb welchen jeweilige Baueinheiten und Komponenten des Inneneinbaus zur Montage bereitgestellt sind; und in
- Fig. 9: eine Perspektivansicht auf den mit dem Fahrwerk, dem Antriebsstrang und dem Inneneinbau versehenen jeweiligen Rohbau des Kraftwagens, welcher im Anschluss an den Inneneinbau mit die Außenhaut bildenden beweglichen und nicht-beweglichen Außenhautelementen versehen wird.

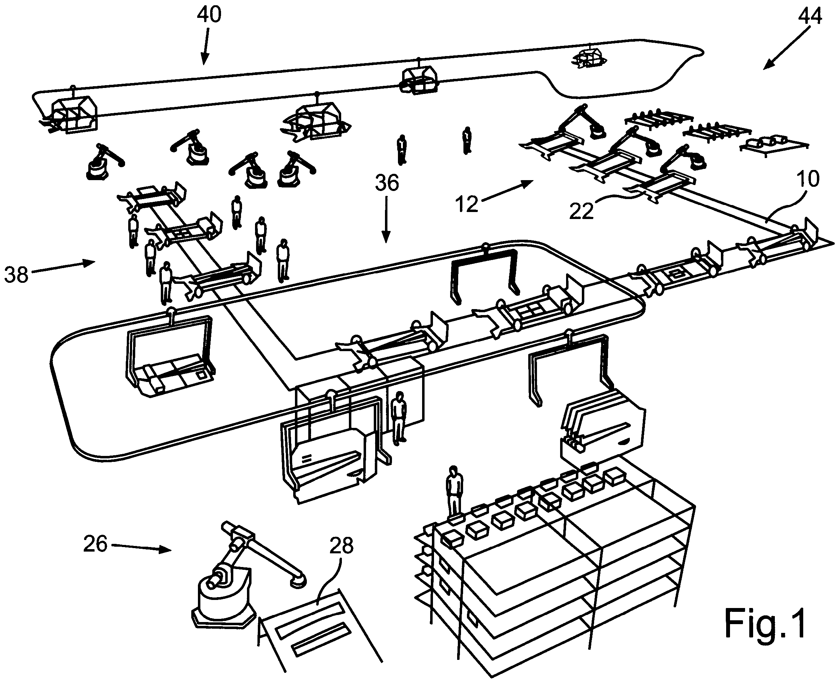

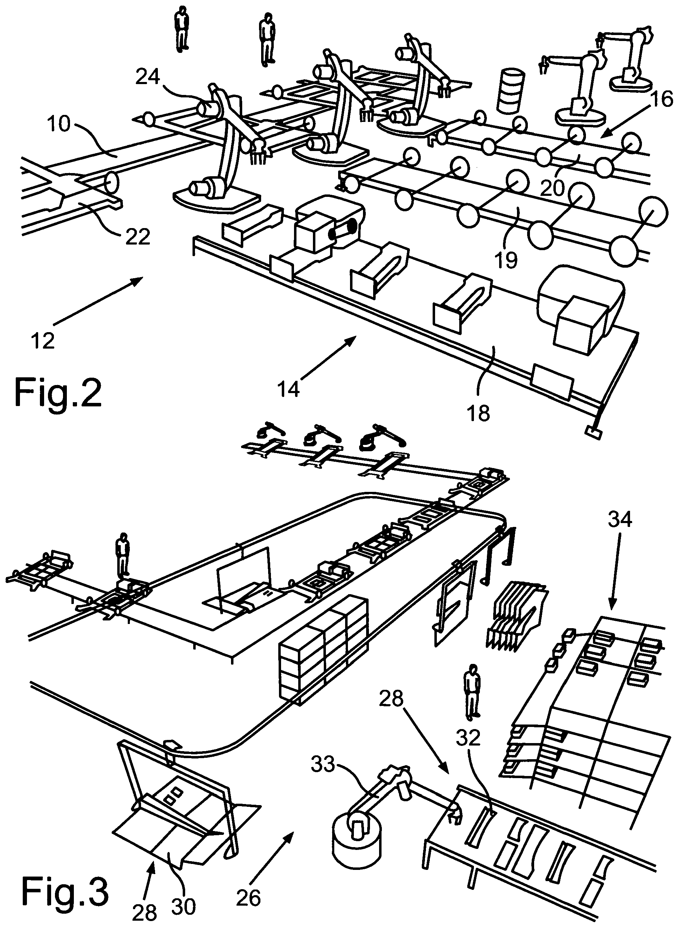

In Fig. 1 ist in einer schematischen Perspektivansicht eine einer im Weiteren noch näher erläuterten Hauptmontagelinie vorgelagerte Montagelinie zum Montieren von Kraftwagen dargestellt. Diese Montagelinie 10 soll im Weiteren in Zusammenschau mit den Fig. 2 bis 6 detailliert erläutert werden.

In Zusammenschau mit Fig. 2 ist zunächst ein erster Bereich 12 der Montagelinie 10 erkennbar, welcher die Vormontage eines jeweiligen Antriebsstrangs 14 und eines jeweiligen Fahrwerks 16 des entsprechenden Kraftwagens zeigt. Dabei zeigt Fig. 2 den Bereich 12 in einer schematischen und ausschnittsweisen Perspektivansicht.

Wie aus Fig. 2 erkennbar ist, umfasst der Bereich 12 der Montagelinie 10 eine Bereitstellungseinrichtung 18 für einen jeweils unterschiedlichen Antrieb beziehungsweise Antriebsstrang 14, welcher in Abhängigkeit des jeweiligen Antriebskonzeptes des Kraftwagens bereitgestellt wird. Hinter der Bereitstellungseinrichtung 18 für den jeweiligen Antrieb beziehungsweise Antriebsstrang 14 sind jeweilige Bereitstellungseinrichtungen 19, 20 für eine Vorderachse beziehungsweise Hinterachse des jeweiligen Fahrwerks 16 erkennbar. Neben der Vorder- und Hinterachse können darüber hinaus weitere Fahrwerksglieder oder Komponenten bereitgestellt werden.

Wie nun aus Fig. 2 erkennbar ist, werden die einzelnen Komponenten des Antriebsstrangs 14 und des Fahrwerks 16 auf einem jeweiligen Hilfsträger 22, der auf der Montagelinie 10 befördert wird, angeordnet. Dies erfolgt mittels entsprechender Roboter 24.

Die jeweiligen Komponenten des Antriebsstrangs 14 und des Fahrwerks 16 werden auf den Bereitstellungseinrichtungen 18 bis 20 sequenziert bereitgestellt und auf dem jeweiligen Hilfsträger 22, welcher einem entsprechend zu fertigenden Kraftwagens zugeordnet ist, positioniert. Die sequenzierte Anordnung und Auswahl der einzelnen Komponenten des Antriebsstrangs 14 und des Fahrwerks 16 erfolgen dabei in Abhängigkeit eines jeweiligen Antriebskonzeptes des Kraftwagens.

In Zusammenschau mit Fig. 3, die in einer weiteren ausschnittsweisen und schematischen Perspektivansicht insbesondere einen zweiten Bereich 26 der Montagelinie 10 erkennen lässt, wird die Vormontage eines Bodenmoduls 28 deutlich. Dieses Bodenmodul 28 umfasst einen Bodenrohbau 30, an welchem als Ausstattung eine Mehrzahl von Baueinheiten 32 anordnenbar sind. Diese Baueinheiten 32 sind variantenspezifisch beziehungsweise variantenabhängig von dem jeweiligen Antriebskonzept des entsprechenden Kraftwagens. Als Baueinheiten 32 können dabei sowohl einzelne Bauteile beziehungsweise Bauelemente verstanden werden wie auch Zusammenbauten oder Baugruppen. Beispielsweise ist es denkbar, den Bodenrohbau 30 mit Hitzeschildern, hydraulischen Leitungen oder Kraftstoffleitungen ebenso zu versehen wie mit Luftleitungen, Kraftstoffleitungen oder dergleichen. Ebenfalls ist es denkbar, den Bodenrohbau 30 mit einem entsprechenden antriebskonzeptbedingten Energiespeichern, beispielsweise einem Tank, einer Batterie oder dergleichen, zu versehen. Auch entsprechende Steuergeräte, welche in Abhängigkeit des entsprechenden Antriebskonzeptes des Kraftwagens gebraucht werden, können an dem Bodenrohbau 30 angebracht sein. Elektrische Baueinheiten 32 wie beispielsweise Kabelbäume, insbesondere der Hauptkabelbaum können ebenfalls an dem Bodenrohbau 30 befestigt sein, um hierdurch das Bodenmodul 28 zu komplettieren.

Die einzelnen Baueinheiten 32 werden dabei beispielsweise mittels eines Roboters 33 an dem Bodenrohbau 30 angebracht. Vorliegend ist es symbolhaft ein Regal 34 dargestellt, an welchem die Baueinheiten 32 beispielsweise sequenziert bereitgestellt sind.

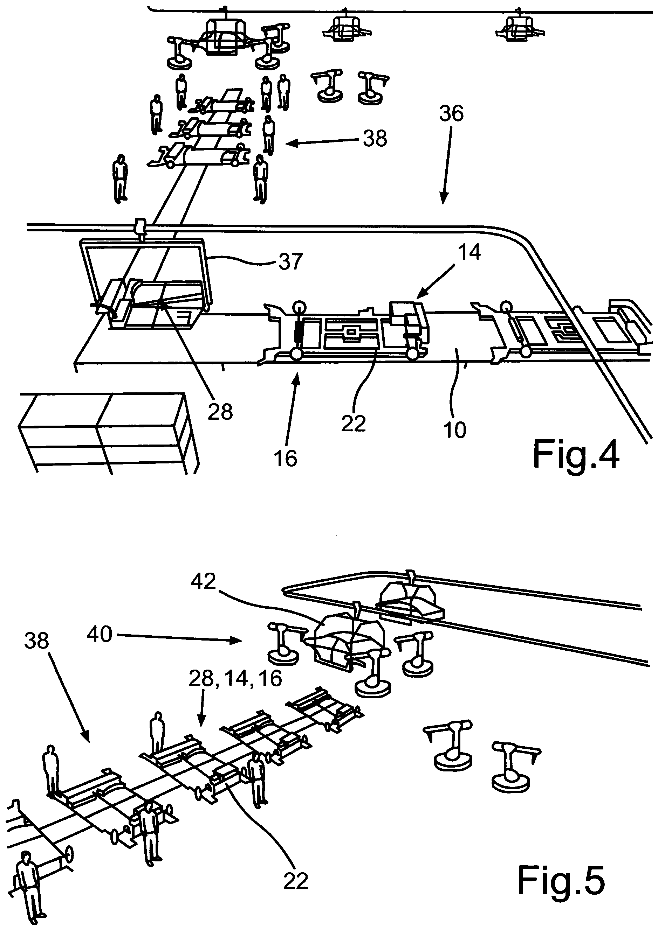

In Zusammenschau mit Fig. 4 ist in einer ausschnittsweisen und schematischen Perspektivansicht ein dritter Bereich 36 der Montagelinie 10 dargestellt. In diesem dritten Bereich erfolgt eine so genannte Verlobung des im ersten Bereich 12 vormontierten Antriebsstrangs 14 beziehungsweise Fahrwerks 16 und des im zweiten Bereich 26 vormontierten Bodenmoduls 28. Dabei ist erkennbar, dass der den Antriebsstrang 14 und das Fahrwerk 16 tragende Hilfsträger 22 von unten herangeführt und oberseitig über eine entsprechende Transporteinrichtung 37 das Bodenmodul 28 von oben her aufgesetzt wird. Durch die Verlobung entsteht somit eine vormontierte Anordnung von Antriebsstrang 14, Fahrwerk 16 und Bodenmodul 28, welche auf die jeweilige Variante des Kraftwagens beziehungsweise auf das jeweilige Antriebskonzept des Kraftwagens abgestimmt ist.

In Fig. 4 sind außerdem weitere Montagestationen 38 erkennbar, innerhalb welchen beispielsweise eine Verbindung der entsprechenden Komponenten und Baueinheiten 32 des Antriebsstrangs 14, des Fahrwerks 16 und des Bodenmoduls 28 erfolgen kann. Neben dem Verbinden der einzelnen Komponenten und Baueinheiten 32 können beispielsweise Leitungen oder Energiespeicher wie Tanks befüllt werden. Außerdem können beispielsweise elektrische Steuergeräte aktiviert werden. Nach der Verlobung sind die einzelnen Komponenten beziehungsweise Baueinheiten 32 somit vorzugsweise betriebsbereit.

In Fig. 5 ist ein vierter Bereich 40 der Montagelinie 10 erkennbar, in welchem ein jeweiliger Rohbau 42 im Rahmen einer so genannten Hochzeit mit seinem jeweils zugehörigen Antriebsstrang 14, Fahrwerk 16 und Bodenmodul 28, die zuvor im dritten Bereich 36 im Rahmen der Verlobung miteinander vereinigt worden sind, verbunden wird. Der Rohbau 42 weist hierzu eine entsprechende Ausnehmung für das Bodenmodul 28 auf, welches entsprechend angesetzt wird. Der Antriebsstrang 14 und das Fahrwerk 16 sowie das Bodenmodul 28 ebenfalls mit dem Rohbau 42 des Kraftwagens verbunden. Nach der Verbindung mit dem Rohbau 42 kann der Hilfsträger 22, welcher zum Tragen des Antriebsstrangs 14, des Fahrwerks 16 und des Bodenmoduls 28 gedient hat, wieder in den ersten Bereich 12 zurückgeführt werden. An dieser Stelle sei angemerkt, dass es sich beim vorliegenden Rohbau 42 um eine selbst tragende Karosserie eines Personenkraftwagens bzw. um einen selbst tragenden Aufbau eines Kraftwagens allgemein handelt.

Da - wie bereits erläutert - die jeweilige Variante des Antriebskonzepts durch entsprechende Ausbildung des Antriebsstrangs 14, des Fahrwerks 16 und des Bodenmoduls 28 erfolgt, ist der Rohbau 42 im Wesentlichen variantenfrei gestaltet. Dies bedeutet, dass die infolge des Antriebskonzeptes erforderliche Variation zumindest im Wesentlichen in die Vormontage des Antriebsstrangs 14, des Fahrwerks 16 und des Bodenmoduls 28 vorverlagert wird.

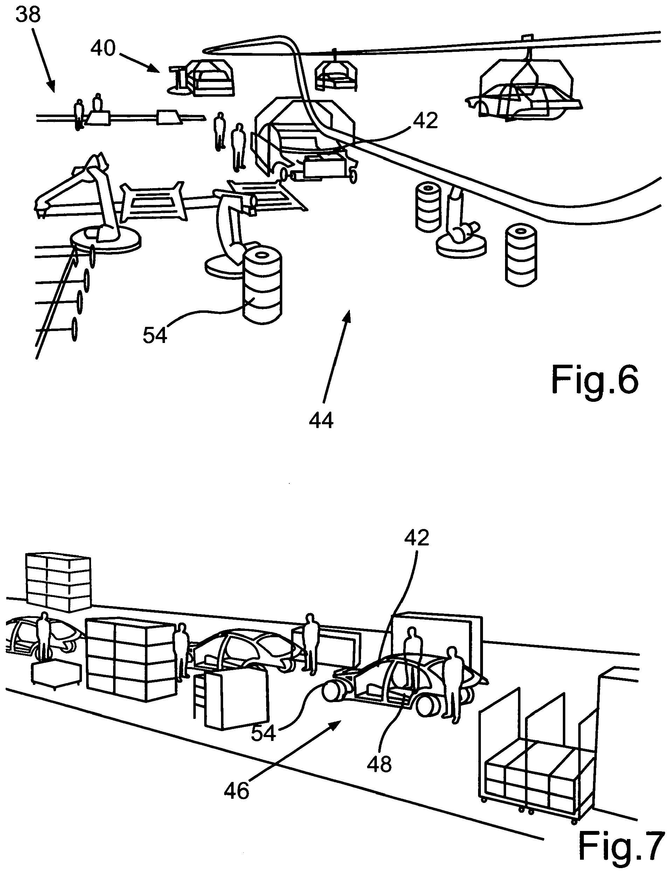

Fig. 6 zeigt schließlich eine weitere Montagestation 44 der Montagelinie 10, bei welcher der Kraftwagen mit Fahrzeugrädern versehen wird. Dies hat insbesondere den Vorteil, dass somit auf Förder- und Transporteinrichtungen, welche das Gewicht des Fahrzeugs aufnehmen bzw. tragen müssen, verzichtet werden kann. Vielmehr kann ab dieser Montagestation 44 der Wagen durch die weitere Montage, insbesondere die im Weiteren noch erläuterte Hauptmontagelinie, gerollt werden. Dies kann entweder fremdkraftbetrieben oder aber durch den eigenen Antrieb des Kraftwagens erfolgen.

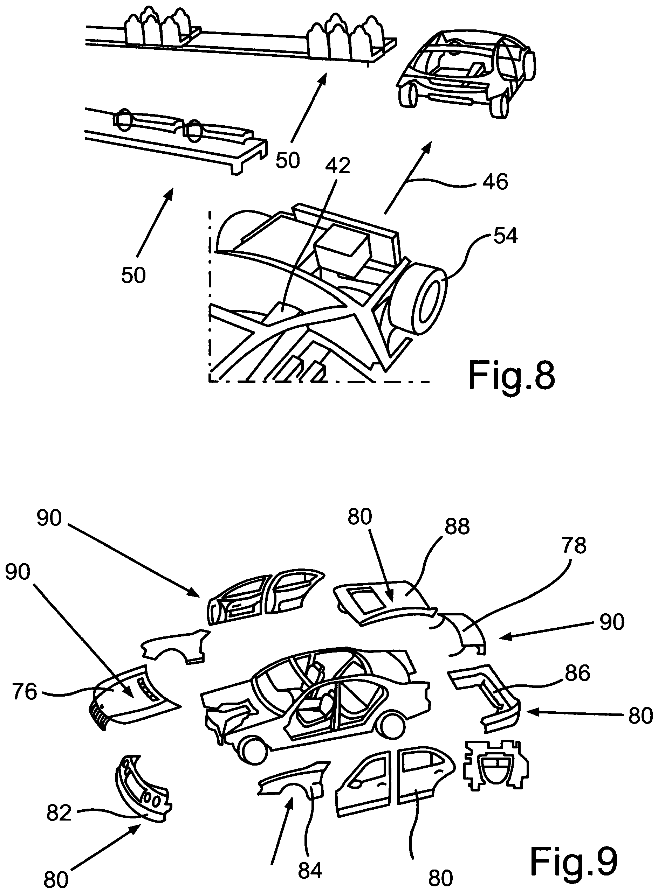

Die Fig. 7 und 8 zeigen jeweilige Perspektivansichten einer Hauptmontagelinie 46, welche sich an die Montagelinie 10 anschließt. Im Unterschied zum bisherigen Montageverfahren findet dabei erst im Anschluss an die Hochzeit die Ausstattung des Rohbaus 42 mit einem Inneneinbau 48 statt. Dieser Inneneinbau 48 umfasst insbesondere den Einbau der Instrumententafel, der Sitzanlagen, der Innenraumverkleidungen, der Mittelkonsole sowie einer Mehrzahl von weiteren Einrichtungen wie beispielsweise der Pedalerie, der Lenksäule oder anderer weiterer Ausstattungen. Hierzu zeigt Fig. 8 jeweilige Montagestationen 50, bei welchen beispielsweise entsprechend zugehörige Sitzanlagen oder Instrumententafeln montiert werden. Fig. 7 zeigt darüber hinaus dass beispielsweise die Verscheibung des Rohbaus 42 in der Hauptmontagelinie 46 erfolgen kann.

Die Einstellung von Funktionselementen des Kraftwagens kann bevorzugter Weise bereits innerhalb der Hauptmontagelinie 46 vorgenommen werden, und zwar insbesondere deshalb, um die Umfänge im Bereich des Endes der Hauptmontagelinie 46 zu verringern. So kann beispielsweise eine Fahrwerkseinstellung, eine Scheinwerfereinstellung oder eine Kalibrierung und Inbetriebnahme von Fahrerassistenzsystemen, insbesondere auch Fahrwerksassistenzsystemen, von der Montagehauptlinie 44 bereits in die Vormontage verlagert werden. Beispielsweise können somit entsprechende Einstellungen von Funktionselementen im Anschluss an die Verlobung beziehungsweise vor oder nach der Hochzeit im Bereich der Vormontage und vor der Hauptmontagelinie 46 geprüft werden. Ebenso ist es durch die Möglichkeit zum autonomen Bewegen des Kraftwagens möglich, dass dieser auf entsprechende Rollenprüfstände oder in Bereiche zur Regenprobe bewegt wird.

Schließlich zeigt Fig. 9 den Rohbau 42 des Kraftwagens in einer schematischen Perspektivansicht, bei welchem der Inneneinbau 48 bereits vorgenommen worden ist. Es ist erkennbar, dass neben dem Inneneinbau 48 auch die Frontscheibe und die Heckscheibe eingepasst worden sind.

In einem weiteren Verfahrensschritt innerhalb der Hauptmontagelinie 46 wird der Rohbau 42 des Kraftwagens nach der Ausstattung mit dem Inneneinbau 48 mit einer Mehrzahl von im Weiteren noch einzeln beschriebenen Außenhautelementen versehen, welche die Außenhaut des Kraftwagens bilden.

Zunächst sind aus Fig. 9 eine Mehrzahl von beweglichen Außenhautelementen 90 erkennbar, welche im Einzelnen als Seitentüren 74, als Fronthaube 76 und als Heckklappe 78 ausgebildet sind. Überdies werden an dem Rohbau 42 auch eine Mehrzahl von nicht-beweglichen Außenhautelementen 80 angebracht, bei welchen es sich vorliegend im einzelnen um ein Frontendmodul 82, vordere oder hintere Kotflügel 84, einen hinteren Stoßfänger 86 sowie ein Dachmodul 88 handelt.

Diese beweglichen Außenhautelemente 90 beziehungsweise nicht-beweglichen Außenhautelemente 80 bilden insgesamt die Außenhaut des Kraftwagens auf im Weiteren noch näher beschriebene Weise.

Eine Besonderheit des Verfahrens zum Herstellen des Personenkraftwagens liegt darin, dass vorliegend insbesondere die beweglichen Außenhautelemente 90, also die Türen 74, die Fronthaube 76 und die Heckklappe 78, nicht bereits in der Rohbaufertigung am Rohbau 42 befestigt worden sind, sondern erstmalig in oder nach einer Montagelinie, insbesondere in oder nach der Hauptmontagelinie 46. Mit anderen Worten werden diese beweglichen Außenhautelemente 90 lediglich einmal am Rohbau 42 angebracht und nicht wie bislang üblich - zunächst in der Rohbaufertigung angebracht und anschließend zur Ausstattung mit diversen Bauteilen nochmals abgenommen.

Somit ergibt sich im vorliegenden Verfahren zum Herstellen des Kraftwagens eine bedeutend einfachere Handhabung der beweglichen Außenhautelemente 90, welche ihrerseits nicht die kathodische Tauchlackierung oder dergleichen Korrosionsschutzlackierung beziehungsweise die Decklackierung des eigentlichen Rohbaus 42 durchlaufen, sondern vielmehr separat gefertigt und gegebenenfalls lackiert werden. In Anschluss daran werden diese beweglichen Außenhautelemente 90 vollständig ausgestattet. Im Fall der Türen 74 bedeutet dies beispielsweise, dass diese mit den Scheiben, den Scheibenhebeeinrichtungen, dem jeweiligen Außenspiegel sowie der jeweiligen Innenverkleidung ausgestattet werden. Erst nach der vollständigen Vormontage der einzelnen beweglichen Außenhautelemente 90 werden diese dann am Rohbau 42 erstmalig befestigt. Dies hat nicht nur den Vorteil, dass die beweglichen Außenhautelemente 90 somit nicht mehr nach der kathodischen Tauchlackierung abgenommen und anschließend wieder angebracht werden müssen, sondern dass diese infolge der Tatsache, dass sie nicht mehr durch die kathodische Tauchlackierung geführt werden, auch aus anderen Materialien hergestellt werden können. So ist es beispielsweise denkbar, diese beweglichen Außenhautelemente 90 auch aus einem Kunststoff zu gestalten, was bislang aufgrund des Durchführens durch die kathodische Tauchlackierung nicht ohne Weiteres möglich gewesen wäre.

Auch die nicht-beweglichen Außenhautelemente 80 werden erst innerhalb der Hauptmontagelinie 46 an den Rohbau 42 angebracht. Dies hat im Falle der Kotflügel 84 beispielsweise den Vorteil, dass deren Verweildauer am Rohbau 42 möglichst gering ist, so dass sich die Möglichkeit der Beschädigung dieser nicht-beweglichen Außenhautelemente 80 deutlich reduzieren lässt.

Insgesamt ist somit ein Verfahren geschaffen, bei welchem die beweglichen wie auch die nicht-beweglichen Außenhautelemente 90, 80 modularisiert werden können und erst in der Montage an den Rohbau 42 des Kraftwagens angebracht werden. Dabei ist es beispielsweise denkbar, dass einzelne Außenhautelemente 90, 80 eine separate kathodische Tauchlackierung oder dergleichen Korrosionsschutzlackierung sowie auch eine Decklackierung durchlaufen, bevor diese erstmalig am Rohbau 42 befestigt werden. Die Befestigung der jeweiligen Außenhautelemente 90 kann dabei insbesondere nach einem Verfahren erfolgen, wie dies beispielsweise aus der WO 2004/02 66 72 A2 als bekannt zu entnehmen ist, deren Inhalt hiermit als ausdrücklich mit umfasst zu betrachten ist. Dies hat beispielsweise den Vorteil, dass die jeweilige Lackierung dann nicht für den gesamten Rohbau ausgelegt sein muss, sondern gegebenenfalls lediglich für die jeweils zu lackierenden Außenhautelemente 90 beziehungsweise 80. Außerdem kann die Temperatur in der Lackierung dann besser auf die Außenhautelemente 90, 80 abgestimmt werden, da diese separat vom Rohbau 42 lackiert werden.

Neben dem verbesserten Verfahrensablauf zur Herstellung der Kraftwagen ist vorliegend auch ein Kraftwagen selbst zu schaffen, dessen Rohbau 42 mit einer kathodischen Tauchlackierung oder dergleichen Korrosionsschutzlackierung versehen ist und an welchem eine Mehrzahl von die Außenhaut bildenden Außenhautelementen 90, 80 angebracht sind, wobei der Rohbau des Kraftwagens lediglich mit der kathodischen Tauchlackierung oder dergleichen Korrosionsschutzlackierung versehen ist. Mit anderen Worten kann bei der Ausführung des Kraftwagens gemäß dem vorliegenden Ausführungsbeispiel auf eine Decklackierung des Rohbaus 42 verzichtet werden. Dies wird insbesondere dadurch ermöglicht, dass der Rohbau 42 durch die Außenhautelemente 90, 80 vollständig kaschiert wird. Hierunter ist insbesondere zu verstehen, dass bei geschlossenen Türen 74, bei geschlossener Fronthaube 76 und bei geschlossener Heckklappe 78 sowie bei angebauten nicht-beweglichen Außenhautelementen 80 durch diese eine geschlossene Außenhaut geschaffen ist, welche den dahinterliegenden Rohbau 42 beziehungsweise die dahinterliegende Karosserie des Personenkraftwagens vollständig kaschiert. Da somit der Rohbau 42 nicht von außen erkennbar ist, bedarf es für diesen keiner Decklackierung. Vielmehr ist es ausreichend, wenn der Rohbau 42 lediglich mit der kathodischen Tauchlackierung oder dergleichen Korrosionsschutzlackierung versehen ist. Da somit der Rohbau - unter den oben beschriebenen Bedingungen - keine sichtbaren Teile mehr aufweist, ist eine decklackfreie Karosserie möglich. Die Karosserie, die von der kathodischen Tauchlackierung kommt, muss dabei nicht zwingendermaßen crashsicher sein. Crashsicher ist diese spätestens, wenn das Bodenmodul 28 gefügt ist. Bis dahin ist die wichtigste Forderung die Einhaltung der Anforderungen der Prozesslastfälle.

Nicht erkennbare Scharniere, über welche die beweglichen Außenhautelemente 90 am Rohbau 42 gehalten sind, sind dabei beispielsweise nicht in Wagenfarbe sondern zum Beispiel mattschwarz lackiert. Wären sie hingegen schon an den jeweiligen beweglichen Außenhautelementen 90 befestigt, gingen notwendige Freiheitsgrade zur Einstellung verloren.

## Patentansprüche

1. Verfahren zum Herstellen von Personenkraftwagen, bei welchem an einem jeweiligen Rohbau (42) des Personenkraftwagens eine Mehrzahl von die Außenhaut des Kraftwagens bildenden beweglichen Außenhautelementen (90), insbesondere Türen (74), Hauben (76) oder Klappen (78), angebracht werden,
**dadurch gekennzeichnet, dass**
die beweglichen Außenhautelemente (90), insbesondere die Türen (74), Hauben (76) oder Klappen (78), erst in oder nach einer Hauptmontagelinie (74) am jeweiligen Rohbau (42) des Personenkraftwagens angebracht werden, wobei sie erstmalig nach Durchlauf einer kathodischen Tauchlackierung oder dgl. Korrosionsschutzlackierung des jeweiligen Rohbaus (42) des Personenkraftwagens an diesem angebracht werden, wobei die beweglichen Außenhautelemente (90), insbesondere die Türen (74), Hauben (76) oder Klappen (78), eine vom jeweiligen Rohbau (42) des Personenkraftwagens separate kathodischen Tauchlackierung oder dgl. Korrosionsschutzlackierung durchlaufen, und wobei die beweglichen Außenhautelemente (90) lediglich einmal am Rohbau (42) angebracht werden.

2. Personenkraftwagen mit einem Rohbau (42), welcher mit einer kathodischen Tauchlackierung versehen ist und an welchem eine Mehrzahl von die Außenhaut des Kraftwagens bildenden Außenhautelementen (90, 80) angebracht sind,
**dadurch gekennzeichnet, dass**
der Rohbau (42) des Personenkraftwagens lediglich mit der kathodischen Tauchlackierung versehen ist.

## Claims

1. Method for producing passenger cars, wherein a plurality of movable shell elements (90) forming the shell of the motor vehicle, in particular doors (74), bonnets (76) or tailgates (78), are fitted to a respective body frame (42) of the passenger car,
**characterised in that**
the movable shell elements (90), in particular the doors (74), bonnets (76) or tailgates (78), are only fitted to the respective body frame (42) of the passenger car in or downstream of a main assembly line (74), wherein they are initially fitted to the respective body frame (42) of the passenger car after it has passed through a cathodic dip coating process or a similar anti-corrosion painting process, wherein the movable shell elements (90), in particular the doors (74), bonnets (76) or tailgates (78), pass through a separate cathodic dip coating process or a similar anti-corrosion painting process, and wherein the movable shell elements (90) are fitted to the body frame (42) only once.

2. Passenger car having a body frame (42) provided with a cathodic dip coating and to which a plurality of shell elements (90, 80) forming the shell of the motor vehicle are fitted,
**characterised in that**
the body frame (42) of the passenger car is only provided with the cathodic dip coating.

## Revendications

1. Procédé de fabrication d'une voiture particulière, sur chaque caisse en blanc (42) de la voiture particulière sont montés une pluralité d'élément d'enveloppe extérieure (90) mobiles formant l'enveloppe extérieure de la voiture particulière, en particulier, les portes (74), les capots (76) ou clapets (78), **caractérisé en ce que** les éléments d'enveloppe extérieure mobiles (90), en particulier les portes (74), les capots (76) ou les clapets (78) sont d'abord montés dans une ligne de montage principale (74) ou après celle-ci, sur chaque caisse en blanc (42) de la voiture particulière, ils sont montés sur celle-ci une fois qu'une électrodéposition cationique ou une peinture de protection anticorrosion de chaque caisse en blanc (42) de la voiture particulière a été appliquée, les éléments d'enveloppe extérieure mobiles (90), en particulier les portes (74), les capots (76) ou les clapets (78) étant soumis à une électrodéposition cationique ou une peinture de protection anticorrosion séparée et les éléments d'enveloppe extérieure mobiles (90), étant montés uniquement une seule fois sur la caisse en blanc (42).

2. Voiture particulière comprenant une caisse en blanc (42) qui est pourvue d'une électrodéposition cationique et sur laquelle une pluralité d'éléments d'enveloppe extérieure (90, 80) formant l'enveloppe extérieure de la voiture particulière sont montés, **caractérisée en ce que** la caisse en blanc (42) de la voiture particulière est pourvue uniquement d'une électrodéposition cationique.
